# EUROPÄISCHE PATENTANMELDUNG

(11) **EP 4 506 606 A1**
(43) Veröffentlichungstag der Anmeldung: **12.02.2025**
(21) Anmeldenummer: 24193671.5
(22) Anmeldetag: 08.08.2024
(51) Int. Cl.: F16L 35/00

(54) **BOHRMASCHINENPUMPE MIT SPRITZSCHUTZ**

(30) Priorität: 11.08.2023 DE 102023121584
(71) Anmelder: Wolfcraft GmbH, 56746 Kempenich (DE)
(72) Erfinder: Ebert, Winfried, 56745 Weibern (DE)
(74) Vertreter: Grundmann, Dirk

(57) **Zusammenfassung**

Die Erfindung betrifft eine von einer Bohrmaschine antreibbare Wasserpumpe mit einem Einlassrohrstutzen (3) und einem Auslassrohrstutzen (4), wobei auf die beiden Rohrstutzen (3, 4) jeweils ein Spritzschutzelement (6) aufgesetzt ist, das einen mit dem Einlassrohrstutzen (3) oder dem Auslassrohrstutzen (4) verbundenen Schlauchverbinder (31, 28) derart kapselt, dass aus dem Schlauchverbinder (31, 28) austretendes Leckagewasser nur durch eine vom Einlassrohrstutzen (3) oder Auslassrohrstutzen (4) entfernte Öffnung (18) austreten kann.

## Beschreibung

### Gebiet der Technik

Die Erfindung betrifft eine Wasserpumpe, die elektrisch und insbesondere von einer Bohrmaschine betreibbar ist, die ein Gehäuse aufweist, aus dem eine in ein Futter der Bohrmaschine einspannbare Antriebswelle herausragt. Ein Einlassrohrstutzen kann mit einem Schlauch verbunden werden, durch den eine Flüssigkeit mittels des von der Bohrmaschine angetriebenen Pumpwerks angesaugt werden kann. Ein Auslassrohrstutzen kann mit einem weiteren Schlauch verbunden werden, durch den die vom Pumpwerk gepumpte Flüssigkeit strömt.

### Stand der Technik

Eine derartige Pumpe wird in der EP 2 826 996 A1 beschrieben.

Die US 2010/0264647 A1, US 2020/0096144 A1 und die CN 207514585 U offenbaren Spritzschutzelemente, mit denen ein Schlauchverbinder oder eine Rohrverbinder gekapselt werden kann.

Der Einlassrohrstutzen oder der Auslassrohrstutzen wird mit einem Schlauchverbinder mit einem Schlauch verbunden. Es kann nicht verhindert werden, dass derartige Schlauchverbinder Undichtigkeiten aufweisen, sodass Wasser austritt. Bei einer elektrischen Wasserpumpe und insbesondere bei einer von einer elektrischen Bohrmaschine antreibbaren Wasserpumpe besteht die Gefahr, dass das ausgetretene Wasser in Berührung mit spannungsführenden Teilen der Bohrmaschine treten kann.

Zum Stand der Technik gehören ferner die US 5,531,695 A und EP 3 163 141 A1.

### Zusammenfassung der Erfindung

Der Erfindung liegt die Aufgabe zugrunde, Maßnahmen anzugeben, mit denen die Gefahr, dass aus undichten Schlauchverbindern austretendes Wasser mit der Wasserpumpe oder einer die Wasserpumpe antreibenden Bohrmaschine in Berührung kommt, vermindert wird.

Gelöst wird die Aufgabe durch die in den Ansprüchen angegebene Erfindung. Die Unteransprüche stellen nicht nur vorteilhafte Weiterbildungen des Hauptanspruchs, sondern auch eigenständige Lösungen der Aufgabe dar.

Zunächst und im Wesentlichen wird vorgeschlagen, dass zumindest einem der Rohrstutzen ein Spritzschutzelement derart zugeordnet ist, dass das bei einer Undichtigkeit im Bereich des im Spritzschutzelement angeordneten Schlauchverbinders austretende Wasser in einer größeren Entfernung zur Bohrmaschine freigesetzt wird. Das Spritzschutzelement kann eine Öffnung aufweisen, durch die der jeweilige Rohrstutzen in eine ringsumschlossene Kammer des Spritzschutzelementes ragt. Die Öffnung kann dabei in einer einen Wasserdurchtritt hemmenden Weise mit dem Rohrstutzen verbunden sein. Durch eine zweite Öffnung, die der ersten Öffnung gegenüberliegen kann, kann der Schlauch hindurchragen. Diese Öffnung kann den Schlauch mit einem Freiraum umgeben, sodass durch diese Öffnung eventuell freigesetztes Wasser austreten kann. Das Spritzschutzelement kann eine langgestreckte Form aufweisen und gewissermaßen eine fluchtende Verlängerung des Einlassrohrstutzens oder des Auslassrohrstutzens sein. Hierdurch vergrößert sich der Abstand einer Austrittsstelle des Wassers gegenüber der Antriebswelle der Wasserpumpe. Es sind bevorzugt Fixierelemente vorgesehen, die mit Gegenfixierelementen des Einlassrohrstutzens oder des Auslassrohrstutzens zusammenwirken. Die Gegenfixierelemente können eine Ringnut aufweisen, die den Rand der ersten Öffnung aufnimmt. Dies bringt bevorzugt eine wasserdurchtrittsfeste Verbindung zum Gehäuse. Das Spritzschutzelement kann drehfest mit dem zugeordneten Rohrstutzen verbunden sein. Es kann aber auch axial unverlagerbar mit dem Rohrstutzen verbunden sein. Es kann ferner vorgesehen sein, dass die Ringnut auf einer von einer Kreiszylinder-Mantelfläche abweichenden Konturlinie verläuft. Der Rand der ersten Öffnung hat dann bevorzugt eine Kontur, die dieser Konturlinie angepasst ist. Das Spritzschutzelement ist dann in seiner Funktionsstellung nicht nur wasserdurchtrittsgehemmt, sondern auch drehfest mit dem Einlassrohrstutzen oder dem Auslassrohrstutzen verbunden. Die Ringnut kann zwei sich gegenüberliegende, auf einer Kreisbogenlinie verlaufende Rundabschnitte aufweisen. Zwischen diesen beiden Rundabschnitten können sich gegenüberliegende und auf parallelen Ebenen verlaufende Flachabschnitte angeordnet sein. Die Öffnung bildet zu diesen Rundabschnitten korrespondierende Rundabschnitte und zu den Flachabschnitten korrespondierende Flachabschnitte. Auf dem Boden der Ringnut kann der Rand der Öffnung berührend anliegen. Es kann ferner vorgesehen sein, dass die Wände der Ringnut Dichtflächen ausbilden, an denen Gegenflächen des Spritzschutzelementes anliegen, die von der ersten Öffnung benachbarten Bereichen ausgebildet sind. Es kann ferner vorgesehen sein, dass das Spritzschutzelement zwei Halbschalen aufweist, die an einem Scharnier miteinander verbunden sind. Die beiden Halbschalen können aber auch anderweitig miteinander verbunden sein, beispielsweise aufeinandergesteckt sein. Die beiden Halbschalen können von einer Offenstellung in eine Geschlossenstellung gebracht werden. Es können Verschlusselemente vorgesehen sein, mit denen die beiden Halbschalen in der Geschlossenstellung gehalten sind. Die Trennlinie, die die beiden Halbschalen in der Geschlossenstellung trennt, kann sich diametral zumindest durch die erste Öffnung erstrecken. Sie kann sich aber auch durch die zweite Öffnung erstrecken. Dies hat zur Folge, dass das Spritzschutzelement in der Offenstellung am Einlassrohrstutzen oder am Auslassrohrstutzen befestigbar ist, in dem zunächst eine Hälfte des Randes der Öffnung in die Ringnut eingesteckt wird und dann beim Schließen der Halbschalen die jeweils andere Hälfte des Randes der Öffnung in die Ringnut eingeschwenkt wird. Gemäß einer bevorzugten Ausgestaltung wird die Ringnut von einem Rohrabschnitt des Einlassrohrstutzens oder des Auslassrohrstutzens gebildet. Die beiden Halbschalen können im Wesentlichen gleich gestaltet sein. Sie können einen hohlzylindrischen Körper ausbilden. Eine Trennebene zwischen den beiden Halbschalen kann eine Diametralebene durch den Hohlzylinder sein, die in der Achse des Hohlzylinders verläuft. Die Randkanten der Halbschalen besitzen Dichtelemente, die einen Wasseraustritt verhindern, sodass Leckagewasser bevorzugt nur durch die von der Verbindungsstelle des Spritzschutzelementes mit dem zugeordneten Rohrstutzen entfernte Öffnung austreten kann. Bevorzugt besitzt der Einlassrohrstutzen und/oder der Auslassrohrstutzen jeweils zwei in Radialrichtung abragende Kragen, die voneinander beabstandet sind. Im montierten Zustand liegt einer der beiden Kragen in der Kammer des Spritzschutzelementes und der andere Kragen außerhalb des Spritzschutzelementes. Bevorzugt liegt eine Stirnwand des Spritzschutzelementes, die die erste Öffnung ausbildet, berührend an den aufeinander zu weisenden Oberflächen der Kragen an. Hierzu kann der Rand der Öffnung aber auch eine die Materialstärke der Stirnwand bereichsweise vergrößernde Rippe aufweisen, die an der Oberfläche eines der Kragen anliegt.

Die Kammer hat bevorzugt eine axiale Länge, die sich von einer der beiden Öffnungen zu der anderen der beiden Öffnungen erstrecken kann, die ausreichend groß ist, um ein Anschlusselement, beispielsweise einen Adapter, der mit dem Einlassrohrstutzen und/oder dem Auslassrohrstutzen und ein mit dem Anschlusselement verbundener Schlauchanschluss, der den Schlauchverbinder bildet, aufzunehmen. Die Kammer hat bevorzugt auch einen kleinsten Durchmesser, der größer ist, als der größte Durchmesser des Schlauchverbinders. Das Anschlusselement kann mit einem Innengewinde auf ein Außengewinde des Einlassrohrstutzens oder des Auslassrohrstutzens aufgeschraubt werden. Der Schlauchanschluss kann unter Ausbildung einer Klemmverbindung auf ein Ende des Schlauchs aufgesetzt sein. Bei dem Schlauchverbinder kann es sich um einen Schnellverbinder handeln. Es ist aber auch vorgesehen, dass der Schlauchanschluss ein Innengewinde aufweist, dass direkt auf ein Außengewinde des Einlassrohrstutzens oder des Auslassrohrstutzens aufgeschraubt werden kann.

Es kann ferner vorgesehen sein, dass das Pumpengehäuse aus Kunststoff besteht, wobei der Einlassrohrstutzen und der Auslassrohrstutzen in einer gemeinsamen Ebene liegen. Die Antriebswelle kann senkrecht zu dieser Ebene stehen. Die Antriebswelle kann von einer Haube umgeben sein, die das Futter der Bohrmaschine aufnehmen kann. Es kann auch vorgesehen sein, dass Einlassrohrstutzen und Auslassrohrstutzen in einer miteinander fluchtenden Anordnung vom Pumpengehäuse abragen. Das Pumpengehäuse kann aber auch aus Metall und insbesondere aus Zinkdruckguss bestehen.

Die Verbindung der beiden unter Ausbildung eines Filmscharniers miteinander verbundenen Halbschalen kann über eine Verschlusslasche erfolgen, die Ausnehmungen aufweist. In der Geschlossenstellung können Vorsprünge in die Ausnehmung hineingreifen. Es kann auch vorgesehen sein, dass eine der Halbschalen eine Auflauffläche aufweist, auf der beim Schließen der Kammer ein Zapfen der anderen Halbschale entlanggleitet, um im Anschluss daran in die Ausnehmung hineinzutreten. Das Spritzschutzelement ist bevorzugt aus Kunststoff gefertigt und kann einen Mehrkantquerschnitt, insbesondere einen Sechskantquerschnitt aufweisen.

### Kurze Beschreibung der Zeichnungen

Ein Ausführungsbeispiel der Erfindung wird nachfolgend anhand beigefügter Zeichnungen erläutert. Es zeigen:
- Fig. 1: in einer perspektivischen Darstellung eine Wasserpumpe,
- Fig. 2: in einer perspektivischen Darstellung ein Spritzschutzelement 6, das auf einen Einlassrohrstutzen 3 oder einen Auslassrohrstutzen 4 der in der Figur 1 dargestellten Wasserpumpe aufgesetzt werden kann,
- Fig. 3: perspektivisch ein Spritzschutzelement 6 in einer Geschlossenstellung, das auf einen Einlassrohrstutzen 3 aufgesetzt ist und ein weiteres Spritzschutzelement 6 in einer Offenstellung, in der es auf den Auslassrohrstutzen 4 aufsetzbar ist,
- Fig. 4: vergrößert den Ausschnitt IV in Figur 3,
- Fig. 5: in einer Ansicht das eine Offenstellung einnehmende Spritzschutzelement 6 gemäß Figur 3,
- Fig. 6: den Schnitt gemäß der Linie VI-VI in Figur 5,
- Fig. 7: perspektivisch das Spritzschutzelement in seiner Offenstellung gemäß Schnitt VII-VII in Figur 5,
- Fig. 8: eine Darstellung gemäß Figur 6, jedoch in der Geschlossenstellung,
- Fig. 9: eine Draufsicht auf ein am Auslassrohrstutzen 4 befestigtes Spritzschutzelement 6 in der Geschlossenstellung,
- Fig. 10: einen Schnitt der Linie X-X in Figur 9,
- Fig. 11: einen Schnitt gemäß der Linie XI-XI in Figur 9,
- Fig. 12: eine Darstellung gemäß Figur 11, jedoch mit einem auf den Rohrstutzen 4 aufgesetzten Anschlusselement 29, auf dem ein am Ende eines Schlauchs 5 angeordneter Schlauchanschluss 28 aufgesteckt ist,
- Fig. 13: eine erste perspektivische Darstellung des Spritzschutzelements 6 und
- Fig. 14: eine zweite perspektivische Darstellung des Spritzschutzelements 6.

### Beschreibung der Ausführungsformen

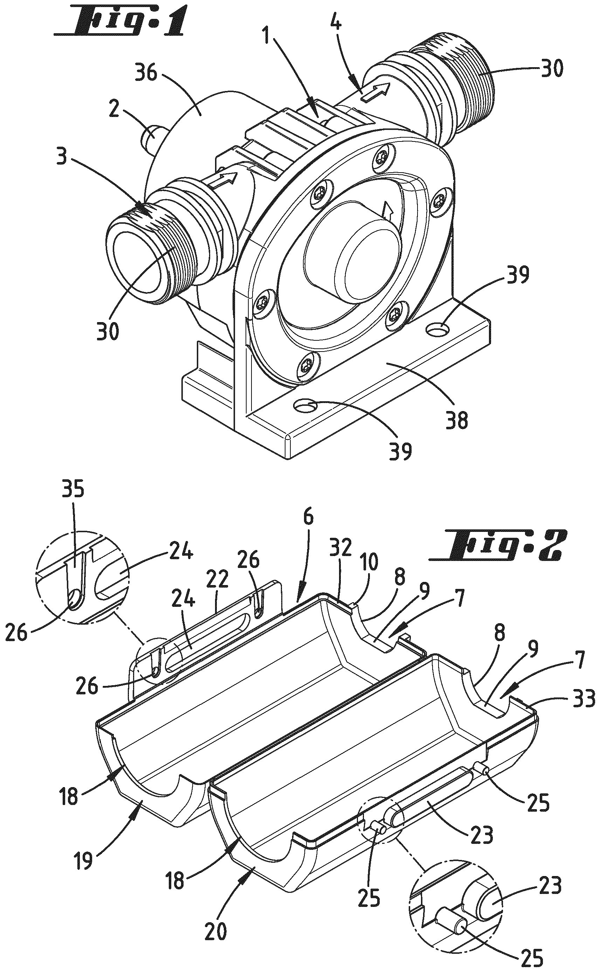

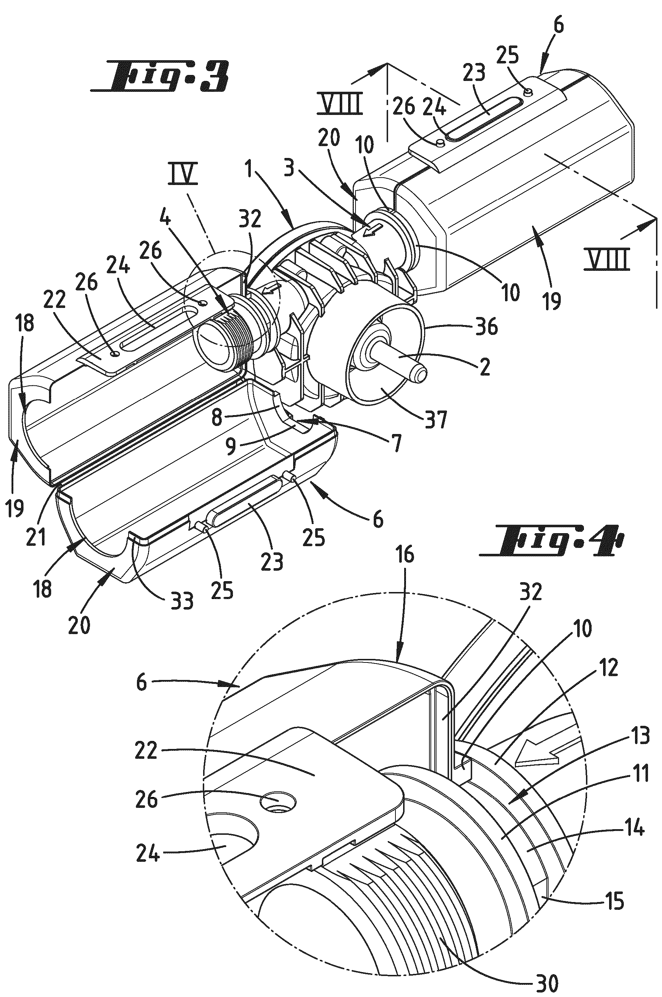

Die Figur 1 zeigt eine von einer elektrischen Bohrmaschine betreibbare Wasserpumpe, wie sie aus dem Stand der Technik bekannt ist. Die Wasserpumpe besitzt ein Pumpengehäuse 1, in dem sich beispielsweise ein über eine Antriebswelle 2 von einer nicht dargestellten Bohrmaschine drehantreibbarer Kreisel befindet, der einen Sog und einen Druck erzeugt, sodass Wasser durch einen am Einlassrohrstutzen 3 angeschlossenen, in der Figur 1 nicht dargestellten Schlauch angesaugt und in einen weiteren, ebenfalls in der Figur 1 nicht dargestellten Schlauch, der an einem Auslassrohrstutzen 4 angeschlossen ist, weiter gefördert werden kann. Die Antriebswelle entspringt dabei dem Boden einer von einer Haube 36 gebildeten, in der Figur 3 sichtbaren Höhlung 37. Das Gehäuse 1 besitzt einen Fuß 38, mit dem das Pumpengehäuse 1, beispielsweise mit Befestigungsschrauben, die eine Befestigungsöffnung 39 durchgreifen, an einem Brett oder dergleichen befestigt werden kann. Auf dem Brett kann sich die nicht dargestellte Bohrmaschine abstützen, wenn ihr Drehantrieb genutzt wird, um beispielsweise den Kreisel der Pumpe drehanzutreiben. Die Drehbewegung der Abtriebswelle der Bohrmaschine wird über ein Futter auf die Antriebswelle 2 übertragen. Der Einlassrohrstutzen 3 und der Auslassrohrstutzen 4 erstrecken sich beim Ausführungsbeispiel fluchtend zueinander. Eine durch eine Höhlung 16 des Rohrabschnitts 27 von Einlassrohrstutzen 3 und Auslassrohrstutzen 4 verlaufende Mittellinie liegt auf derselben Achse.

Um zu vermeiden, dass Wasser, welches aus einer undichten Schlauchverbindung austritt, mit der ein Schlauch mit dem Einlassrohrstutzen 2 oder dem Auslassrohrstutzen 4 verbunden ist, in Berührung mit spannungsführenden Teilen der elektrischen Bohrmaschine tritt, sind zwei Spritzschutzelemente 6 vorgesehen. Eines der Spritzschutzelemente 6 kann mit dem Einlassrohrstutzen 3 und ein anderes Spritzschutzelement 6 mit dem Auslassrohrstutzen 4 derart in Verbindung gebracht werden, dass zwischen dem Spritzschutzelement 6 und dem Einlassrohrstutzen 3 beziehungsweise dem Auslassrohrstutzen 4 eine im Wesentlichen wasserdichte Verbindung besteht und der Schlauchverbinder in einer Kammer 17 des Spritzschutzelementes 6 Aufnahme findet.

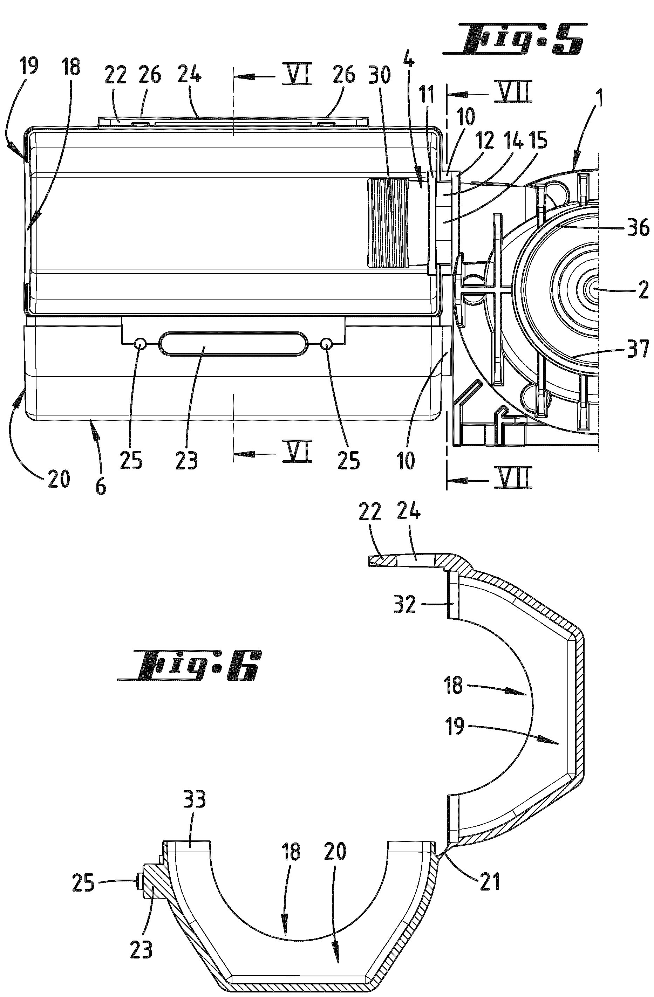

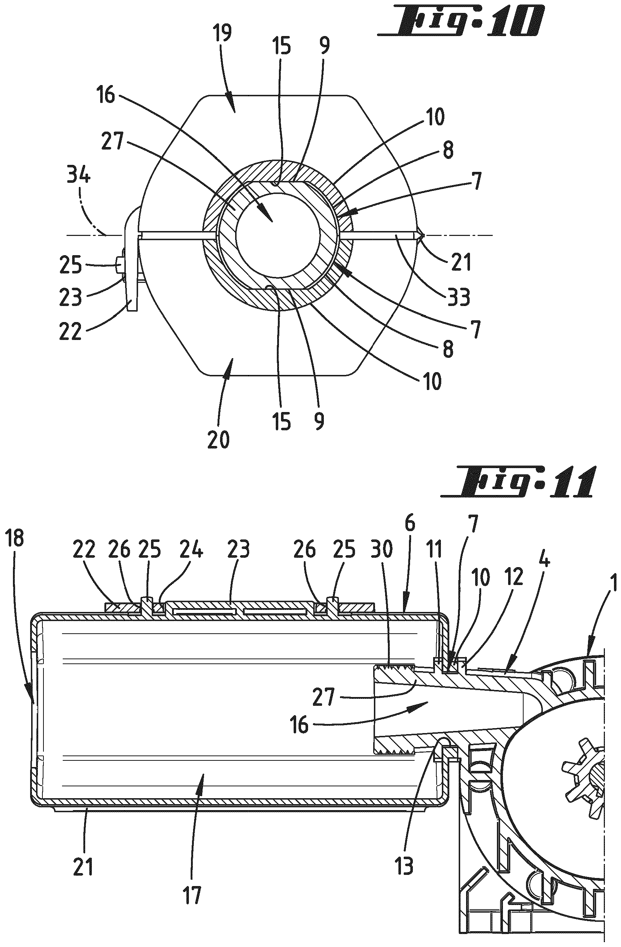

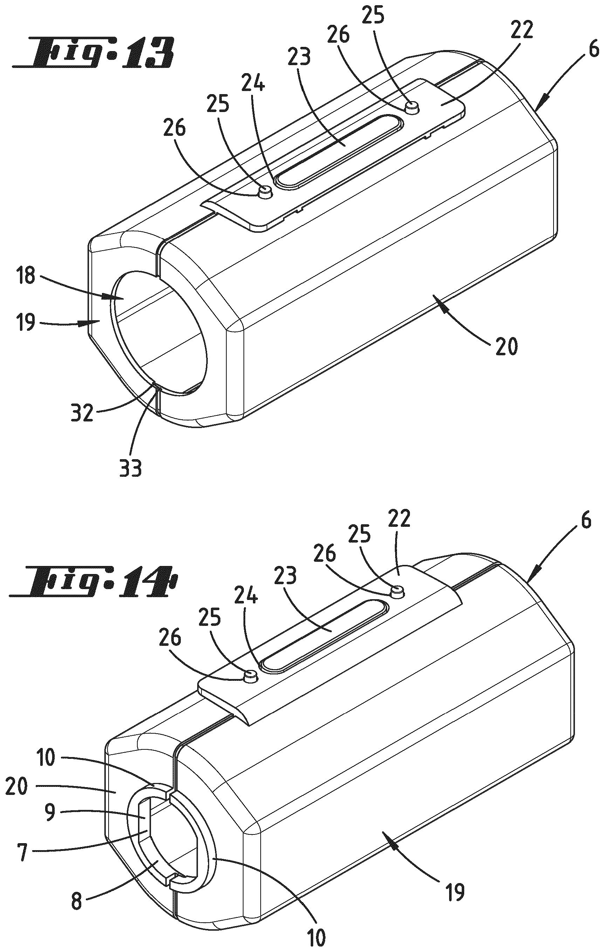

Ein derartiges Spritzschutzelement 6 ist in den Figuren 2, 6, 8, 13 und 14 in einer Einzeldarstellung dargestellt und in den Figuren 3, 4, 5, 7, 9, 11 und 12 in einer mit dem Pumpengehäuse 1 kombinierten Stellung.

Das Spritzschutzelement 6 besteht aus zwei im Wesentlichen formidentischen Halbschalen 19, 20, die mit einem Filmscharnier 21 materialeinheitlich miteinander verbunden sind. Das Spritzschutzelement 6 besteht aus Kunststoff. Die beiden Halbschalen 19, 20 können aber auch von getrennten Bauteilen ausgebildet sein, die aufeinandergesteckt sind. Das Spritzschutzelement 6 kann auch aus einem anderen Material, beispielsweise Metall, bestehen.

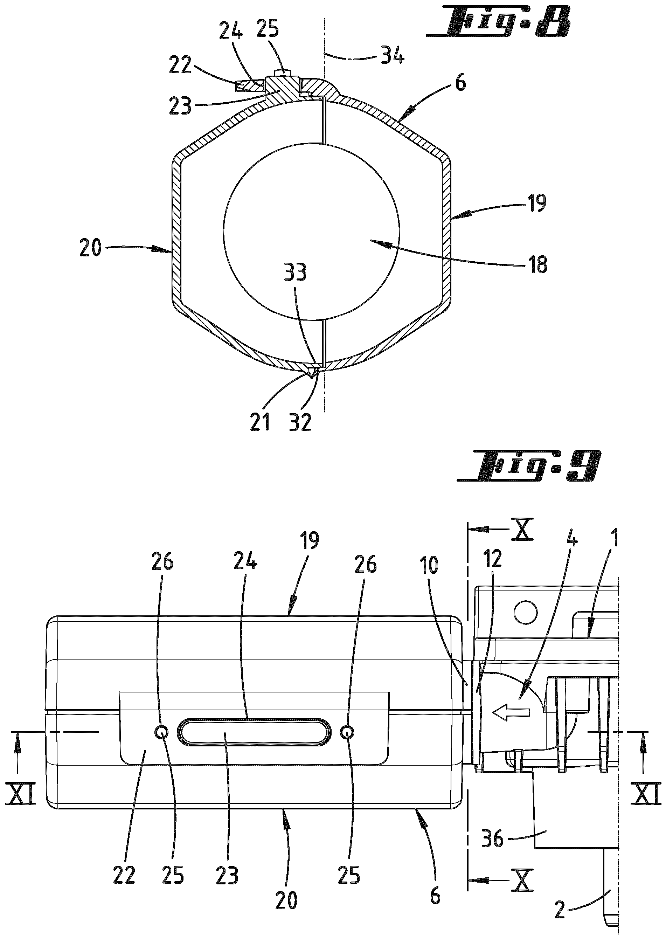

Die beiden Halbschalen 19, 20 nehmen in den Figuren 2 bis 7 ihre Offenstellung ein und sind in den Figuren 8 bis 14 in ihrer Geschlossenstellung dargestellt. In der Geschlossenstellung nimmt das Spritzschutzelement 6 die Form eines hohlen Mehrkantzylinders ein. Die Querschnittsfläche ist die eines Sechskants. Die beiden Stirnflächen des Spritzschutzelementes 6 bilden Öffnungen 7,18 aus.

Eine erste Öffnung 7 besitzt einen kleineren Durchmesser, als eine zweite Öffnung 18. Durch beide Öffnungen 7, 18 verläuft eine Trennlinie 34, sodass die Öffnungen 7, 18 in der Offenstellung jeweils im Wesentlichen halbkreisförmige Ausbuchtungen in den beiden Stirnseiten des Spritzschutzelementes 6 ausbilden.

Die erste Öffnung besitzt einen Rand, der im geschlossenen Zustand zwei sich gegenüberliegende Rundabschnitte 8 ausbildet, durch die wiederum die Trennlinie 34 verläuft. Der Rand bildet darüber hinaus zwei im geschlossenen Zustand parallel zueinander verlaufende Flachabschnitte 9 aus. Darüber hinaus wird die Außenseite der Öffnung 7 von einer die Materialstärke der Wand lokal verstärkenden Rippe 10 umgeben.

Die Ränder der Halbschalen 19, 20 bilden jeweils Fahnen 32, 33 aus, die in der Geschlossenstellung des Spritzschutzelementes 6 aneinander anliegen und in diesem Zustand Dichtflächen ausbilden. Die in der Geschlossenstellung aneinander anliegenden Randkanten der Halbschalen 19, 20 bewirken somit eine Abdichtung, sodass Leckagewasser nur aus der Öffnung 18 austreten kann.

Eine erste Halbschale 19 bildet eine Verschlusslasche 22 aus, die den Rand der zweiten Halbschale 20 in der Geschlossenstellung überfangen kann. Die zweite Halbschale 20 bildet einen Vorsprung 23 aus, der im geschlossenen Zustand in eine längliche Ausnehmung 24 der Verschlusslasche 22 treten kann. Es sind darüber hinaus Zapfen 25 vorgesehen, die beim Ausführungsbeispiel eine kreiszylindrische Gestalt aufweisen. Diese Zapfen 25 können an auf der Innenseite der Verschlusslasche 20 angeordneten Auflaufflächen 35 entlanggleiten, um im vollständig geschlossenen Zustand des Spritzschutzelementes 6 in eine Ausnehmung 26 einzurasten, die dem Querschnitt der Zapfen 25 formangepasst ist.

Sowohl der Einlassrohrstutzen 3 als auch der Auslassrohrstutzen 4 bildet jeweils Gegenfixierelemente aus, die mit den zuvor genannten, von dem Rundabschnitt 8 und dem Flachabschnitt 9 gebildeten Fixierelementen des Spritzschutzelementes 6 derart zusammenwirken können, dass das Spritzschutzelement 6 jeweils im Wesentlichen wasserdicht, zumindest aber wasserdurchtrittsgehemmt mit einem Rohrabschnitt 27 entweder des Einlassrohrstutzens oder des Auslassrohrstutzens 4 verbindbar ist. Die Fixierelemente wirken mit den Gegenfixierelementen darüber hinaus derart zusammen, dass das Spritzschutzelement 6 sowohl in Achsrichtung als auch in einer Drehrichtung um die Achse des Einlassrohrstutzens 3 beziehungsweise Auslassrohrstutzens 4 fest an das Pumpengehäuse 1 gefesselt ist.

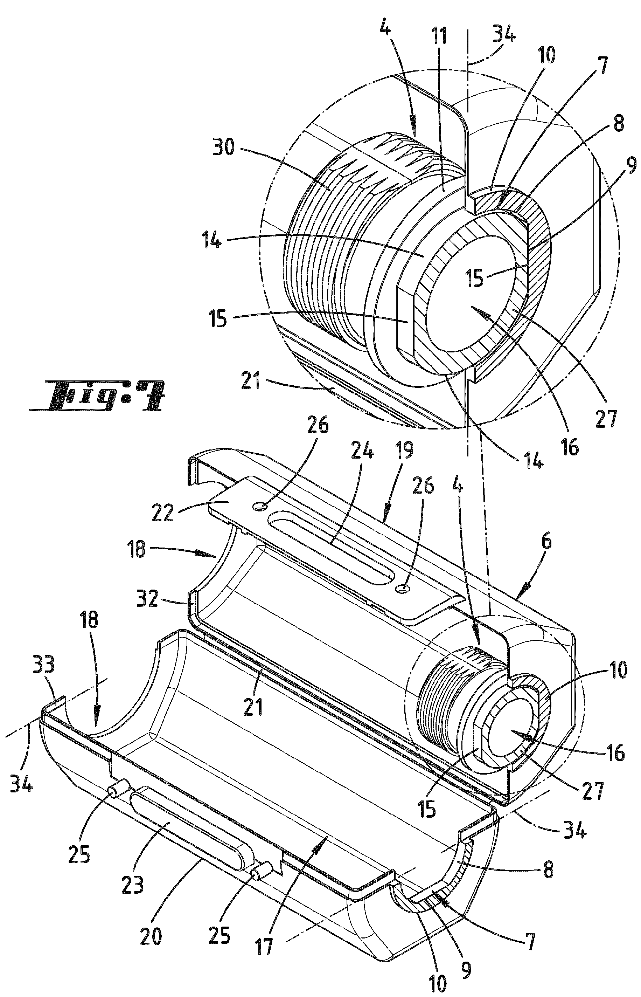

Die Gegenfixierelemente werden in den Figuren 7, 10 und 11 dargestellt. Es werden exemplarisch nur die Gegenfixierelemente des Auslassrohrstutzens 4 beschrieben. Die Gegenfixierelemente des Einlassrohrstutzens 3 haben die gleiche Funktion und Ausgestaltung.

Es sind zwei Kragen 11, 12 vorgesehen, die radial vom Rohrabschnitt 27 abragen und zwischen sich eine Ringnut 13 ausbilden. Der Boden der Ringnut verläuft auf verschiedenen Flächenabschnitten, die mit dem Rundabschnitt 8 und dem Flachabschnitt 9 der ersten Öffnung 7 korrespondieren. Ein Rundabschnitt 14 des Bodens der Ringnut 13 ist derart gestaltet, dass die nach innen weisende Oberfläche des Rundabschnitts 8 der ersten Öffnung 7 flächig daran anliegt. Es sind zwei sich gegenüberliegende Rundabschnitte 14 vorgesehen. Der Flachabschnitt 15 des Bodens der Ringnut 13 ist derart gestaltet, dass die nach innen weisende Oberfläche des Flachabschnitts 19 der ersten Öffnung flächig daran anliegt. Im Bereich der ersten Öffnung 7 besitzen die voneinander weg weisenden Oberflächen der Innenseite der Stirnwand des Spritzschutzelementes 6 und der Außenseite der Stirnwand, die hier von der Außenseite der Rippe 10 gebildet ist, einen Abstand, der dem Abstand der aufeinander zu weisenden Oberflächen der Kragen 11, 12 entspricht, sodass die Fixierelemente 8, 9 zusammen mit den Gegenfixierelementen 11, 12, 13, 14, 15 eine Art Labyrinthdichtung ausbilden, die den Durchtritt von Wasser zumindest hemmt, bevorzugt aber verhindert.

Die Figur 3 zeigt, dass die Spritzschutzelemente 6 gewissermaßen Verlängerungen des Gehäuses 1 ausbilden, wobei in diesen Verlängerungen jeweils eine Kammer 17 ausgebildet ist, die einen Schlauchverbinder aufnehmen kann.

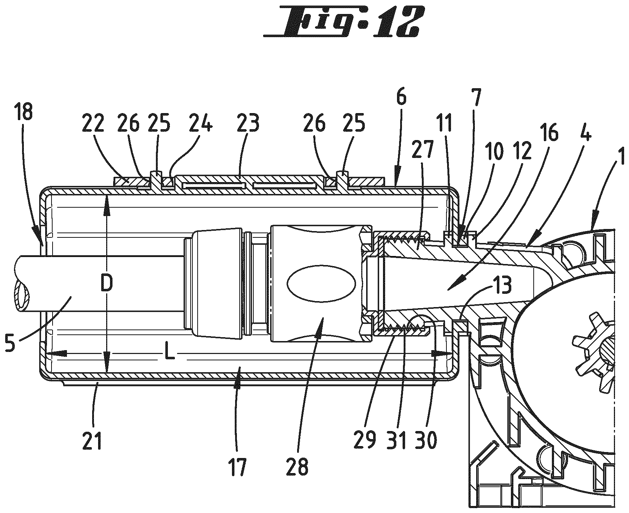

Die Figur 12 zeigt ein Anschlusselement 29, das als Schraubadapter ausgebildet ist und mit einem Innengewinde 31 auf ein Außengewinde 30 des vom Einlassrohrstutzen 3 beziehungsweise Auslassrohrstutzen 4 gebildeten Rohrabschnitts 27 aufgeschraubt ist. Dies kann unter Zwischenlage einer Dichtung erfolgen. Auf einen in der Figur 12 nicht dargestellten, sondern nur angedeuteten Rohrabschnitt ist ein als Schnellverbinder ausgebildeter Schlauchanschluss 28 aufgesteckt, der fest mit dem Ende eines Schlauchs 5 verbunden ist.

Die Kammer 17 des Spritzschutzelementes 6 besitzt einen derartige axiale Länge L, dass der Schlauchanschluss 18 im auf das Anschlusselement 29 aufgesteckten Zustand und zusätzlich noch einige Zentimeter des Schlauchs 5 in der Kammer 17 Aufnahme finden kann, sodass der Schlauch frei durch die zweite Öffnung 18 herausragen kann. Bei einer eventuellen Undichtigkeit des Schlauchanschlusses 28 beziehungsweise des Anschlusselementes 29 kann Wasser in die Kammer 17 austreten. Das Wasser kann die Kammer 17 aber nur durch eine Öffnung, die der ersten Öffnung 7 gegenüber liegt, verlassen. Der Abstand einer eventuellen Wasseraustrittsstelle zur Bohrmaschine ist dadurch gegenüber dem Stand der Technik vergrößert worden.

Der kleinste Durchmesser D der Kammer 17 ist größer, als der größte Durchmesser des Schlauchanschlusses 28 beziehungsweise des Anschlusselementes 29.

Die entlang der Randkanten der Halbschalen 19, 20 verlaufenden Fahnen liegen in der Geschlossenstellung flächig aneinander und bilden eine derartige Dichtung, dass rinnendes Wasser nicht durch die Trennfläche der beiden Halbschalen 19, 20 aus der Kammer 17 heraustreten kann.

Die vorstehenden Ausführungen dienen der Erläuterung der von der Anmeldung insgesamt erfassten Erfindungen, die den Stand der Technik zumindest durch die folgenden Merkmalskombinationen jeweils auch eigenständig weiterbilden, wobei zwei, mehrere oder alle dieser Merkmalskombinationen auch kombiniert sein können, nämlich:

Eine Wasserpumpe, die gekennzeichnet ist durch zumindest ein Spritzschutzelement 6, das eine erste Öffnung 7 aufweist, durch die der Einlassrohrstutzen 3 oder der Auslassrohrstutzen 4 in eine ringsumschlossene Kammer 17 des Spritzschutzelements 6 ragt, das eine zweite Öffnung 18 aufweist, durch die der Schlauch derart hindurchragen kann, dass sein Ende innerhalb der Kammer 17 mit dem Einlassrohrstutzen 3 oder dem Auslassrohrstutzen 4 verbunden ist, und die Fixierelemente 8, 9 aufweist, die in eine einen Wasserdurchtritt hemmende Verbindung mit Gegenfixierelementen 11, 12, 13, 14, 15 des Einlassrohrstutzens 3 oder des Auslassrohrstutzens 4 bringbar sind.

Eine Wasserpumpe, die dadurch gekennzeichnet ist, dass das Spritzschutzelement 6 eine erste Halbschale 19 und eine zweite Halbschale 20 aufweist, die an einem Scharnier 21 miteinander verbunden sind und die von einer Offenstellung, in der das Spritzschutzelement 6 am Einlassrohrstutzen 3 oder am Auslassrohrstutzen 4 befestigbar oder davon entfernbar ist, in eine Geschlossenstellung bringbar ist, in der das Spritzschutzelement 6 mit der ersten Öffnung 7 am Einlassrohrstutzen 3 oder Auslassrohrstutzen 4 befestigt ist, wobei Verschlusselemente 22, 23 vorgesehen sind, um die beiden Halbschalen 19, 20 in der Geschlossenstellung zu halten.

Eine Wasserpumpe, die dadurch gekennzeichnet ist, dass das Spritzschutzelement 6 bezogen auf eine Erstreckungsrichtung des Einlassrohrstutzens 3 oder des Auslassrohrstutzens 4 axial fest und/oder undrehbar am Einlassrohrstutzen 3 oder Auslassrohrstutzens 4 befestigt oder befestigbar ist.

Eine Wasserpumpe, die dadurch gekennzeichnet ist, dass die Gegenfixierelemente 11, 12, 13, 14, 15 eine Ringnut 13 aufweisen, in die ein Rand 8, 9 der ersten Öffnung 7 eingreift.

Eine Wasserpumpe, die dadurch gekennzeichnet ist, dass der Boden der Ringnut 13 auf einer von einer Kreiszylinder-Mantelfläche abweichenden Konturlinie verläuft und der Rand 8, 9 der ersten Öffnung 7 dieser Konturlinie derart angepasst ist, dass das Spritzschutzelement 6 in seiner Geschlossenstellung undrehbar oder zumindest nur begrenzt verdrehbar am Einlassrohrstutzen 3 oder am Auslassrohrstutzen 4 befestigt ist.

Eine Wasserpumpe, die dadurch gekennzeichnet ist, dass die Ringnut 13 von zwei von einem Rohrabschnitt 27 des Einlassrohrstutzens 3 oder Auslassrohrstutzens 4 radial abragenden Kragen 11, 12 gebildet ist.

Eine Wasserpumpe, die dadurch gekennzeichnet ist, dass die Ringnut 13 zwei sich gegenüberliegende, auf einer Kreisbogenlinie verlaufende Rundabschnitte 14 und zwei sich gegenüberliegende, auf parallelen Ebenen verlaufende Flachabschnitte 15 aufweist und die Öffnung 7 zwei zu den Rundabschnitten 14 korrespondierende Rundabschnitte 8 und zwei zu den Flachabschnitten 15 korrespondierende Flachabschnitte 9 aufweist.

Eine Wasserpumpe, die dadurch gekennzeichnet ist, dass die Kammer 17 einen kleinsten Durchmesser D aufweist, der größer ist, als der Durchmesser eines am Schlauch 5 befestigten Schlauchanschlusses 28 und eine Länge L aufweist, die größer ist, als die Länge eines am Einlassrohrstutzen 3 oder Auslassrohrstutzen 4 befestigten Anschlusselements 29 und des damit verbundenen Schlauchanschlusses 28.

Eine Wasserpumpe, die dadurch gekennzeichnet ist, dass der Einlassrohrstutzen 3 und der Auslassrohrstutzen 4 jeweils ein Außengewinde 30 aufweisen, wobei auf das Außengewinde 30 ein Innengewinde 31 eines Anschlusselementes 29 aufschraubbar ist, das mit einem Schlauchanschluss 28 verbindbar ist und/oder dass der Einlassrohrstutzen 3 und der Auslassrohrstutzen 4 in einer gemeinsamen Ebene liegen und/oder sich diametral gegenüberliegen und/oder dass die Flachabschnitte 9, 15 parallel zu einer Trennlinie 34 verlaufen, die mittig durch die erste Öffnung 7 oder den Rohrabschnitt 27 verläuft und/oder dass das Verschlusselement eine Verschlusslasche 22 mit einer Ausnehmung 24, 26 aufweist, in die in der Geschlossenstellung ein Vorsprung 23, 25 eingreift und/oder dass eine erste Halbschale 19 eine Ausnehmung 26 mit einer Auflauffläche 35 aufweist und eine zweite Halbschale 20 einen Zapfen 25 aufweist, der beim Schließen der Kammer 17 mit einer Stirnfläche an der Auflauffläche 35 entlanggleitet, um im Anschluss daran in die Ausnehmung 26 einzutreten und/oder dass das Spritzschutzelement 6 aus Kunststoff besteht, das Scharnier 21 ein Filmscharnier ist und einen Mehrkantquerschnitt aufweist.

Alle offenbarten Merkmale sind (für sich, aber auch in Kombination untereinander) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren, auch ohne die Merkmale eines in Bezug genommenen Anspruchs, mit ihren Merkmalen eigenständige erfinderische Weiterbildungen des Standes der Technik, insbesondere um auf Basis dieser Ansprüche Teilanmeldungen vorzunehmen. Die in jedem Anspruch angegebene Erfindung kann zusätzlich ein oder mehrere der in der vorstehenden Beschreibung, insbesondere mit Bezugsziffern versehene und/oder in der Bezugsziffernliste angegebene Merkmale aufweisen. Die Erfindung betrifft auch Gestaltungsformen, bei denen einzelne der in der vorstehenden Beschreibung genannten Merkmale nicht verwirklicht sind, insbesondere soweit sie erkennbar für den jeweiligen Verwendungszweck entbehrlich sind oder durch andere technisch gleichwirkende Mittel ersetzt werden können.

**Liste der Bezugszeichen**

| | | | |
|---|---|---|---|
| 1 | Gehäuse | 26 | Ausnehmung |
| 2 | Antriebswelle | 27 | Rohrabschnitt |
| 3 | Einlassrohrstutzen | 28 | Schlauchanschluss |
| 4 | Auslassrohrstutzen | 29 | Anschlusselement |
| 5 | Schlauch | 30 | Außengewinde |
| 6 | Spritzschutzelement | 31 | Innengewinde |
| 7 | erste Öffnung | 32 | Fahne |
| 8 | Rundabschnitt | 33 | Fahne |
| 9 | Flachabschnitt | 34 | Trennlinie |
| 10 | Rippe | 35 | Auflauffläche |
| 11 | Kragen | 36 | Haube |
| 12 | Kragen | 37 | Höhlung |
| 13 | Ringnut | 38 | Fuß |
| 14 | Rundabschnitt | 39 | Befestigungsöffnung |
| 15 | Flachabschnitt | | |
| 16 | Höhlung | | |
| 17 | Kammer | | |
| 18 | zweite Öffnung | | |
| 19 | Halbschale | | |
| 20 | Halbschale | | |
| 21 | Scharnier, Filmscharnier, | | |
| 22 | erstes Verschlusselement, Verschlusslasche | | |
| 23 | zweites Verschlusselement, Vorsprung | | |
| 24 | Ausnehmung | | |
| 25 | Vorsprung, Zapfen | | |

## Patentansprüche

1. Wasserpumpe mit einem Gehäuse (1), mit einem Einlassrohrstutzen (3) und einem Auslassrohrstutzen (4), die jeweils mit einem Schlauch (5) verbindbar sind, **gekennzeichnet durch** zumindest ein Spritzschutzelement (6), das eine erste Öffnung (7) aufweist, durch die der Einlassrohrstutzen (3) oder der Auslassrohrstutzen (4) in eine ringsumschlossene Kammer (17) des Spritzschutzelements (6) ragt, das eine zweite Öffnung (18) aufweist, durch die der Schlauch derart hindurchragen kann, dass sein Ende innerhalb der Kammer (17) mit dem Einlassrohrstutzen (3) oder dem Auslassrohrstutzen (4) verbunden ist, und die Fixierelemente (8, 9) aufweist, die in eine einen Wasserdurchtritt hemmende Verbindung mit Gegenfixierelementen (11, 12, 13, 14, 15) des Einlassrohrstutzens (3) oder des Auslassrohrstutzens (4) bringbar sind.

2. Wasserpumpe nach Anspruch 1, **dadurch gekennzeichnet, dass** das Spritzschutzelement (6) eine erste Halbschale (19) und eine zweite Halbschale (20) aufweist, die an einem Scharnier (21) miteinander verbunden sind und die von einer Offenstellung, in der das Spritzschutzelement (6) am Einlassrohrstutzen (3) oder am Auslassrohrstutzen (4) befestigbar oder davon entfernbar ist, in eine Geschlossenstellung bringbar ist, in der das Spritzschutzelement (6) mit der ersten Öffnung (7) am Einlassrohrstutzen (3) oder Auslassrohrstutzen (4) befestigt ist, wobei Verschlusselemente (22, 23) vorgesehen sind, um die beiden Halbschalen (19, 20) in der Geschlossenstellung zu halten.

3. Wasserpumpe nach einem der vorhergehenden Ansprüche, **dadurch gekennzeichnet, dass** das Spritzschutzelement (6) bezogen auf eine Erstreckungsrichtung des Einlassrohrstutzens (3) oder des Auslassrohrstutzens (4) axial fest und/oder undrehbar am Einlassrohrstutzen (3) oder Auslassrohrstutzens (4) befestigt oder befestigbar ist.

4. Wasserpumpe nach einem der vorhergehenden Ansprüche, **dadurch gekennzeichnet, dass** die Gegenfixierelemente (11, 12, 13, 14, 15) eine Ringnut (13) aufweisen, in die ein Rand (8, 9) der ersten Öffnung (7) eingreift.

5. Wasserpumpe nach Anspruch 4, **dadurch gekennzeichnet, dass** der Boden der Ringnut (13) auf einer von einer Kreiszylinder-Mantelfläche abweichenden Konturlinie verläuft und der Rand (8, 9) der ersten Öffnung (7) dieser Konturlinie derart angepasst ist, dass das Spritzschutzelement (6) in seiner Geschlossenstellung undrehbar oder zumindest nur begrenzt verdrehbar am Einlassrohrstutzen (3) oder am Auslassrohrstutzen (4) befestigt ist.

6. Wasserpumpe nach einem der Ansprüche 4 oder 5, **dadurch gekennzeichnet, dass** die Ringnut (13) von zwei von einem Rohrabschnitt (27) des Einlassrohrstutzens (3) oder Auslassrohrstutzens (4) radial abragenden Kragen (11, 12) gebildet ist.

7. Wasserpumpe nach einem der Ansprüche 4 bis 6, **dadurch gekennzeichnet, dass** die Ringnut (13) zwei sich gegenüberliegende, auf einer Kreisbogenlinie verlaufende Rundabschnitte (14) und zwei sich gegenüberliegende, auf parallelen Ebenen verlaufende Flachabschnitte (15) aufweist und die Öffnung (7) zwei zu den Rundabschnitten (14) korrespondierende Rundabschnitte (8) und zwei zu den Flachabschnitten (15) korrespondierende Flachabschnitte (9) aufweist.

8. Wasserpumpe nach einem der vorhergehenden Ansprüche, **dadurch gekennzeichnet, dass** die Kammer (17) einen kleinsten Durchmesser (D) aufweist, der größer ist, als der Durchmesser eines am Schlauch (5) befestigten Schlauchanschlusses (28) und eine Länge (L) aufweist, die größer ist, als die Länge eines am Einlassrohrstutzen (3) oder Auslassrohrstutzen (4) befestigten Anschlusselements (29) und des damit verbundenen Schlauchanschlusses (28).

9. Wasserpumpe nach einem der vorhergehenden Ansprüche, **dadurch gekennzeichnet, dass** der Einlassrohrstutzen (3) und der Auslassrohrstutzen (4) jeweils ein Außengewinde (30) aufweisen, wobei auf das Außengewinde (30) ein Innengewinde (31) eines Anschlusselementes (29) aufschraubbar ist, das mit einem Schlauchanschluss (28) verbindbar ist.

10. Wasserpumpe nach einem der vorhergehenden Ansprüche, **dadurch gekennzeichnet, dass** der Einlassrohrstutzen (3) und der Auslassrohrstutzen (4) in einer gemeinsamen Ebene liegen und/oder sich diametral gegenüberliegen.

11. Wasserpumpe nach einem der vorhergehenden Ansprüche, **dadurch gekennzeichnet, dass** die Flachabschnitte (9, 15) parallel zu einer Trennlinie (34) verlaufen, die mittig durch die erste Öffnung (7) oder den Rohrabschnitt (27) verläuft.

12. Wasserpumpe nach einem der vorhergehenden Ansprüche, **dadurch gekennzeichnet, dass** das Verschlusselement eine Verschlusslasche (22) mit einer Ausnehmung (24, 26) aufweist, in die in der Geschlossenstellung ein Vorsprung (23, 25) eingreift.

13. Wasserpumpe nach einem der vorhergehenden Ansprüche, **dadurch gekennzeichnet**, und/oder dass eine erste Halbschale (19) eine Ausnehmung (26) mit einer Auflauffläche (35) aufweist und eine zweite Halbschale (20) einen Zapfen (25) aufweist, der beim Schließen der Kammer (17) mit einer Stirnfläche an der Auflauffläche (35) entlanggleitet, um im Anschluss daran in die Ausnehmung (26) einzutreten.

14. Wasserpumpe nach einem der vorhergehenden Ansprüche, **dadurch gekennzeichnet, dass** das Spritzschutzelement (6) aus Kunststoff besteht, das Scharnier (21) ein Filmscharnier ist und einen Mehrkantquerschnitt aufweist.

15. Vorrichtung oder Verfahren, **gekennzeichnet durch** eines oder mehrere der kennzeichnenden Merkmale eines der vorhergehenden Ansprüche.
